# EUROPEAN PATENT APPLICATION

(11) **EP 1 758 194 A2**
(43) Date of publication of application: **28.02.2007**
(21) Application number: 06016734.3
(22) Date of filing: 10.08.2006
(51) Int. Cl.: H01M 8/04, H01M 8/06, H01M 16/00

(54) **Fuel cell having charging unit**

(30) Priority: 22.08.2005 KR 20050077001
(71) Applicant: LG Electronics Inc., Yongdungpo-gu Seoul (KR); LG Chem, Ltd., Yongdungpo-Gu Seoul (KR)
(72) Inventor: Kim, Ki-Dong, Gimpo Gyeonggi-Do (KR); Ryoo, Sung-Nam, Yongdungpo-Gu Seoul (KR)
(74) Representative: TER MEER - STEINMEISTER & PARTNER GbR

(57) **Abstract**

A fuel cell having a charging unit (60), comprising: a fuel supplying unit (10) for supplying a fuel; a reformer (20) for generating hydrogen containing gas including hydrogen by receiving a fuel from the fuel supplying unit; a stack unit (30) for generating electricity and heat by an electro-chemical reaction between the hydrogen generated from the reformer and additionally-supplied oxygen; a power converter (40) installed at one side of the stack unit, for converting a current generated from the stack unit; and a charging unit installed at one side of the power converter, for charging an electric appliance.

## Description

### RELATED APPLICATION

The present disclosure relates to subject matter contained in priority Korean Application No. 10-2005-0077001, filed on August 22, 2006, which is herein expressly incorporated by reference in its entirely.

### BACKGROUND OF THE INVENTION

### 1. Field of the Invention

The present invention relates to a fuel cell having a charging unit, and more particularly, to a fuel cell having a charging unit capable of charging an electric motor by using redundant electricity due to a nighttime driving.

### 2. Description of the Background Art

Electric energy being used in a building is generated from a water power plant or a thermal power plant. The electric energy generated from a power plant is supplied to buildings or home of each area through a power transmission line. Then, the supplied electric energy is used to operate a television, a fluorescent lamp, a refrigerator, an air conditioner, etc.

However, in order to obtain the electric energy from a power plant, the power plant has to combust oil or coal thus to generate thermal energy. Then, the thermal energy has to be converted into electric energy, and thus an electricity generating efficiency is lowered. Furthermore, while the electric energy generated from the power plant is transmitted to each building through a power transmission line, an electricity loss is generated thereby to cause a low energy efficiency. That is, a large amount of fuel energy is consumed so as to obtain electric energy to be used in each building. As the fuel energy such as oil, coal, etc. is consumed, pollutants are generated thus to cause an environment pollution.

Accordingly, a fuel cell having an excellent energy efficiency for generating electric energy in an eco-friendly manner is being developed. The fuel cell directly generates electric energy by using chemical energy of a fuel by an electro-chemical reaction between a fuel supplied from outside and air.

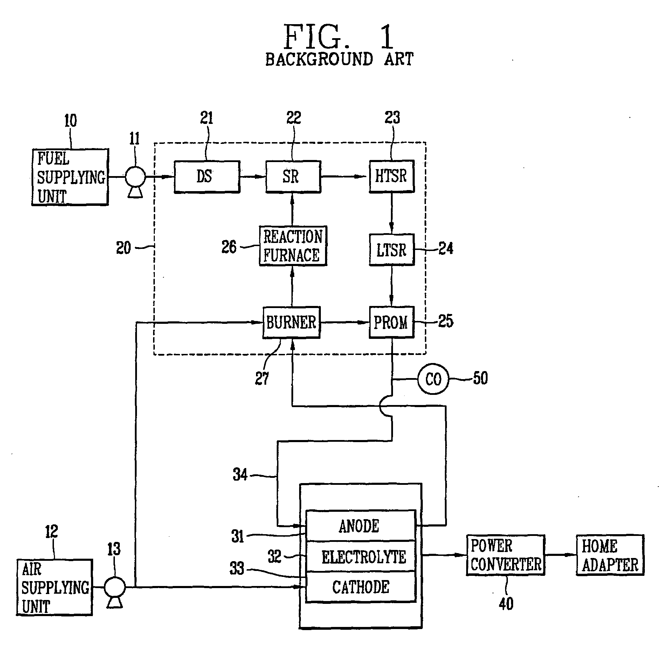

FIG. 1 is a schematic view showing a fuel cell in accordance with the related art.

As shown, the related art fuel cell system comprises a fuel supplying unit 10 for supplying a certain amount of fuel, a reformer 20 for generating hydrogen containing gas including hydrogen and heat by receiving a fuel from the fuel supplying unit 10, a stack unit 30 for generating electricity and heat by an electro-chemical reaction between the hydrogen generated from the reformer 20 and additionally-supplied oxygen, and a power converter 40 for converting electricity generated from the stack unit 30.

The reformer 20 includes a desulfurizing reactor (DS) 21 for removing sulfur contained in a fuel supplied from the fuel supplying unit 10 by using water and air, a steam reformer (SR) 22 for reacting a fuel with steam, a high temperature steam reactor (HTS) 23 for reacting carbon monoxide with steam, a low temperature steam reactor (LTS) 24 for converting carbon monoxide into carbon dioxide, a partial oxidation reactor (PRO) 25 for converting carbon monoxide having not been oxidized into carbon dioxide, a reaction furnace 26 for generating hydrogen from a fuel by a reforming process and a hydrogen refining process, and a burner 27 contacting the reaction furnace 26 for supplying heat to the reaction furnace 26.

The stack unit 30 is formed accordingly as a plurality of unit cells are stacked to one another, each unit cell composed of an anode 31, an electrolyte 32, and a cathode 33. The power converter 40 for converting a direct current generated from the stack unit 30 into an alternating current to be used at home is installed at one side of the stack unit 30.

A concentration detecting sensor 50 for detecting a concentration of carbon monoxide included in the hydrogen containing gas is installed in the middle of a supplying line 34 for supplying hydrogen containing gas generated from the reformer to the stack unit 30.

Unexplained reference numerals 11 and 13 denote compressors, and 12 denotes an air supplying unit.

An operation of the related art fuel cell will be explained as follows.

First, a fuel such as methanol, liquefied natural gas (LNG), gasoline, etc. is supplied from the fuel supplying unit 10 to the reformer 20. Then, a stream reforming process and a partial oxidation process are performed in the reformer 20, thereby generating hydrogen containing gas including hydrogen, reaction heat, and water.

In the stack unit 30 to which the hydrogen containing gas has been supplied, hydrogen is supplied to the anode 31 thereby to be oxidized into H⁺ and e⁻ by an electro-chemical oxidation process. The ionized hydrogen is supplied to the cathode 33 through the electrolyte 32, and the electron moves through the anode 31 thereby to generate electricity, heat and water. The electricity generated from the stack unit 30 is converted by the power converter 40 thus to operate an electric appliance.

However, the related art fuel cell has the following problems. Since an electric appliance such as a refrigerator, etc. has to be continuously provided with power for 24 hours, the fuel cell is continuously driven thereby to supply the same power irrespective of the number of electric appliances. However, since the number of electric appliances to be used is decreased at night, a fuel is wasted when the same power as that during daytime is applied to the electric appliance during the nighttime.

### SUMMARY OF THE INVENTION

Therefore, an object of the present invention is to provide a fuel cell having a charging unit capable of charging an electric motor by using redundant electricity due to a nighttime driving.

To achieve these and other advantages and in accordance with the purpose of the present invention, as embodied and broadly described herein, there is provided a fuel cell having a charging unit, comprising: a fuel supplying unit for supplying a fuel; a reformer for generating hydrogen containing gas including hydrogen by receiving a fuel from the fuel supplying unit; a stack unit for generating electricity and heat by an electro-chemical reaction between the hydrogen generated from the reformer and additionally-supplied oxygen; a power converter installed at one side of the stack unit, for converting a current generated from the stack unit; and a charging unit installed at one side of the power converter, for charging an electric appliance.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view showing a structure of a fuel cell in accordance with the related art;
FIG. 2 is a schematic view showing a fuel cell having a charging unit according to a first embodiment of the present invention; and
FIG. 3 is a schematic view showing a structure of the charging unit of FIG. 2.

### DETAILED DESCRIPTION OF THE INVENTION

Reference will now be made in detail to the preferred embodiments of the present invention, examples of which are illustrated in the accompanying drawings.

Hereinafter, a fuel cell having a charging unit according to the present invention will be explained in more detail.

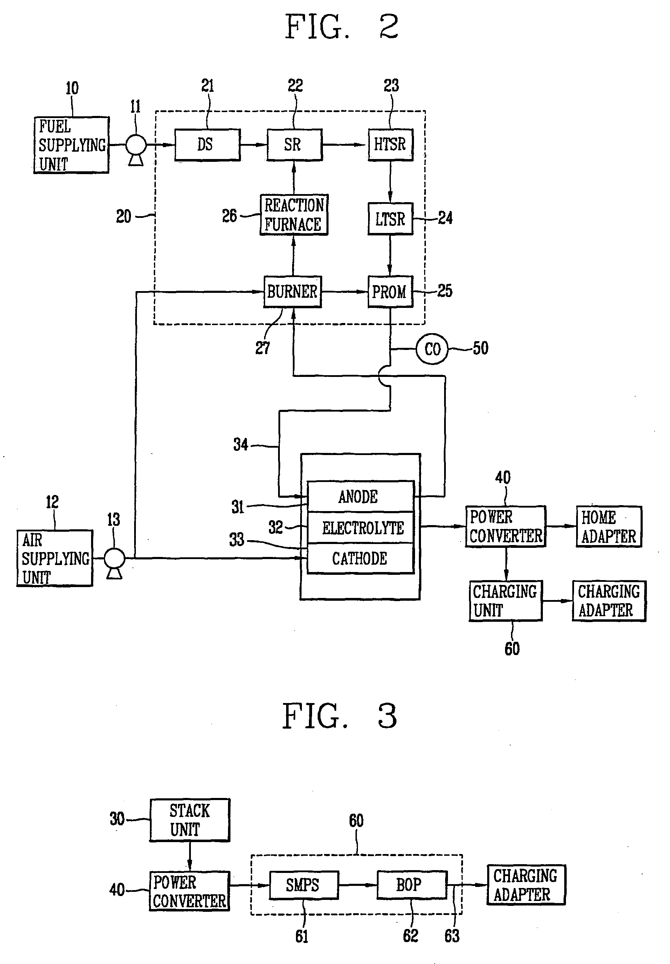

FIG. 2 is a schematic view showing a fuel cell having a charging unit according to a first embodiment of the present invention, and FIG. 3 is a schematic view showing a structure of the charging unit of FIG. 2.

As shown, a fuel cell having a charging unit 60 according to the present invention comprises: a fuel supplying unit 10 for supplying a fuel; a reformer 20 for generating hydrogen containing gas including hydrogen by receiving a fuel from the fuel supplying unit 10; a stack unit 30 for generating electricity and heat by an electro-chemical reaction between the hydrogen generated from the reformer 20 and additionally-supplied oxygen; a power converter 40 installed at one side of the stack unit 30, for converting a current generated from the stack unit 30; and a charging unit 60 installed at one side of the power converter 40, for charging an electric appliance.

The reformer 20 includes a desulfurizing reactor (DS) 21 for removing sulfur contained in a fuel supplied from the fuel supplying unit 10 by using water and air, a steam reformer (SR) 22 for reacting a fuel with steam, a high temperature steam reactor (HTS) 23 for reacting carbon monoxide with steam, a low temperature steam reactor (LTS) 24 for converting carbon monoxide into carbon dioxide, a partial oxidation reactor (PRO) 25 for converting carbon monoxide having not been oxidized into carbon dioxide, a reaction furnace 26 for generating hydrogen from a fuel by a reforming process and a hydrogen refining process, and a burner 27 contacting the reaction furnace 26 for supplying heat to the reaction furnace 26.

The stack unit 30 is formed accordingly as a plurality of unit cells are stacked to one another, each unit cell composed of an anode 31, an electrolyte 32, and a cathode 33. The power converter 40 for converting a direct current generated from the stack unit 30 into an alternating current to be used at home is installed at one side of the stack unit 30.

A concentration detecting sensor 50 for detecting a concentration of carbon monoxide included in the hydrogen containing gas is installed in the middle of a supplying line 34 for supplying hydrogen containing gas generated from the reformer 20 to the stack unit 30.

The charging unit 60 comprises a switching mode power supply (SMPS) 61 connected to the power converter for converting a current in correspondence with each electric appliance, a bi-polar amplifier (BOP) 62 connected to the SMPS 61 for amplifying a current converted by the SMPS 61, and a lead line 63 connected to the bi-polar amplifier (BOP) 62 for charging each electric appliance.

The SMPS 61 is a module type power supplying device for converting a current supplied from outside into a current corresponding to a computer, a color television, a video cartridge recorder (VCR), an exchanger, a wireless communication device, etc. The SMPS 61 controls a high frequency more than a commercial cycle by using a semiconductor switching characteristic, and attenuates an impact.

The SMPS is divided into several types according to each circuit and each input/output power. Recently, a resonant circuit is the most commonly used, and an AC/DC converter for converting an AC of 110V or 220V into a DC of 5∼48V and a DC/DC converter for converting the DC of 5∼48V into a DC of 3.3∼48V are most commonly used.

First, a fuel such as methanol, liquefied natural gas (LNG), gasoline, etc. and water are supplied from the fuel supplying unit 10 to the reformer 20. Then, a stream reforming process and a partial oxidation process are performed in the reformer 20, thereby generating hydrogen containing gas including hydrogen, reaction heat, and water.

In the stack unit 30 to which the hydrogen containing gas has been supplied, hydrogen is supplied to the anode 31 thereby to be oxidized into H⁺ and e⁻ by an electro-chemical oxidation process. The ionized hydrogen is supplied to the cathode 33 through the electrolyte 32, and the electron moves through the anode 31 thereby to generate electricity, heat and water.

The electricity generated from the stack unit 30 is converted by the power converter 40 thus to operate an electric appliance. Since the number of electric appliances to be used is decreased at night, redundant electricity during the nighttime driving is used to charge not only an electric motor but also another device. Accordingly, an energy efficiency of the fuel cell is enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell having a charging unit, comprising:
a fuel supplying unit for supplying a fuel;
a reformer for generating hydrogen containing gas including hydrogen by receiving a fuel from the fuel supplying unit;
a stack unit for generating electricity and heat by an electro-chemical reaction between the hydrogen generated from the reformer and additionally-supplied oxygen;
a power converter installed at one side of the stack unit, for converting a current generated from the stack unit; and
a charging unit installed at one side of the power converter, for charging an electric appliance.

2. The fuel cell of claim 1, wherein the charging unit comprises:
a switching mode power supply connected to the power converter for converting a current in correspondence with each electric appliance;
a bi-polar amplifier connected to the switching mode power supply for amplifying a current converted by the switching mode power supply; and
a lead line connected to the bi-polar amplifier for charging each electric appliance.
